Europäisches Patentamt

European Patent Office

Office européen des brevets

(19)

(11) Veröffentlichungsnummer: **0 125 408**
**B1**

(12) # EUROPÄISCHE PATENTSCHRIFT

(45) Veröffentlichungstag der Patentschrift:
24.06.87

(51) Int. Cl.⁴: **F 02 B 33/44**

(21) Anmeldenummer: **84102321.1**

(22) Anmeldetag: **05.03.84**

(54) **Mittels Abgasturbolader aufgeladene Viertakt-Brennkraftmaschine.**

(30) Priorität: **15.03.83 DE 3309184**

(43) Veröffentlichungstag der Anmeldung:
**21.11.84 Patentblatt 84/47**

(45) Bekanntmachung des Hinweises auf die Patenterteilung:
**24.06.87 Patentblatt 87/26**

(84) Benannte Vertragsstaaten:
**CH FR LI NL**

(56) Entgegenhaltungen:
**DE - A - 1 935 155**
**DE - A - 3 230 598**

**MOTORTECHNISCHE ZEITSCHRIFT, Band 74, Nr. 12, Dezember 1972, T. ROZSAS "Anwendung der Ähnlichkeitsgesetze beim Ladungswechsel des Viertaktmotor", Seiten 479-486**

(73) Patentinhaber: **M.A.N. - B&W Diesel GmbH, Stadtbachstrasse 1, D-8900 Augsburg 1 (DE)**

(72) Erfinder: **Mikota, Thomas, Nordstr. 30, D-8904 Friedberg (DE)**

## Beschreibung

Die Erfindung betrifft eine mittels Abgasturbolader aufgeladene 4-Takt-Brennkraftmaschine, deren durch Auslassventile beherrschte Auslasskanäle an eine oder mehrere mit der Abgasturbine verbundene Abgasleitungen und deren von Einlassventilen beherrschte Einlasskanäle an einen vom Verdichter mit Ladeluft versorgten Luftsammelraum angeschlossen sind.

Bei einer derartigen 4-Takt-Brennkraftmaschine bestand die Aufgabe darin, die Einlasskanäle derart auszubilden, dass während der Spülphase und etwa der ersten Hälfte des Saughubes eine bestimmte Menge an kinetischer Energie in den in den Kanälen befindlichen Luftsäulen speicherbar und diese so gespeicherte Energie während des Restes des Saughubes und der Nacheinlassphase für eine optimale Nachladung der Zylinder ausnutzbar ist.

Diese Aufgabe ist erfindungsgemäss bei einer 4-Takt-Brennkraftmaschine der eingangs genannten Art durch Einlasskanäle mit charakteristischen Merkmalen, so wie im Kennzeichen des Anspruches 1 angegeben, gelöst. Vorteilhafte Ausgestaltungen solcher Einlasskanäle sind in den Unteransprüchen gekennzeichnet.

Die erfindungsgemässe Ausbildung der Einlasskanäle, so wie angegeben, erbringt eine optimale Nachladung der Zylinder. Durch entsprechende Wahl der Einlass-öffnet-Zeitpunkte und Einlass-schliesst-Zeitpunkte sind dann für einen bestimmten Lastbereich, in der Regel den am meisten gefahrenen Lastbereich der Maschine, ein minimaler Kraftstoffverbrauch und/oder eine Drehmomenterhöhung erzielbar.

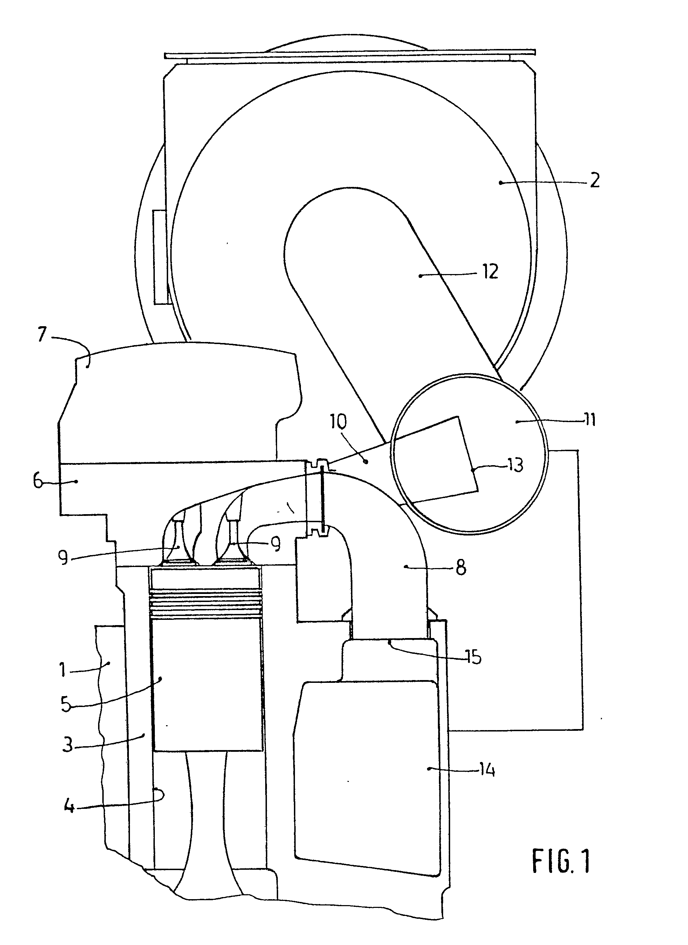

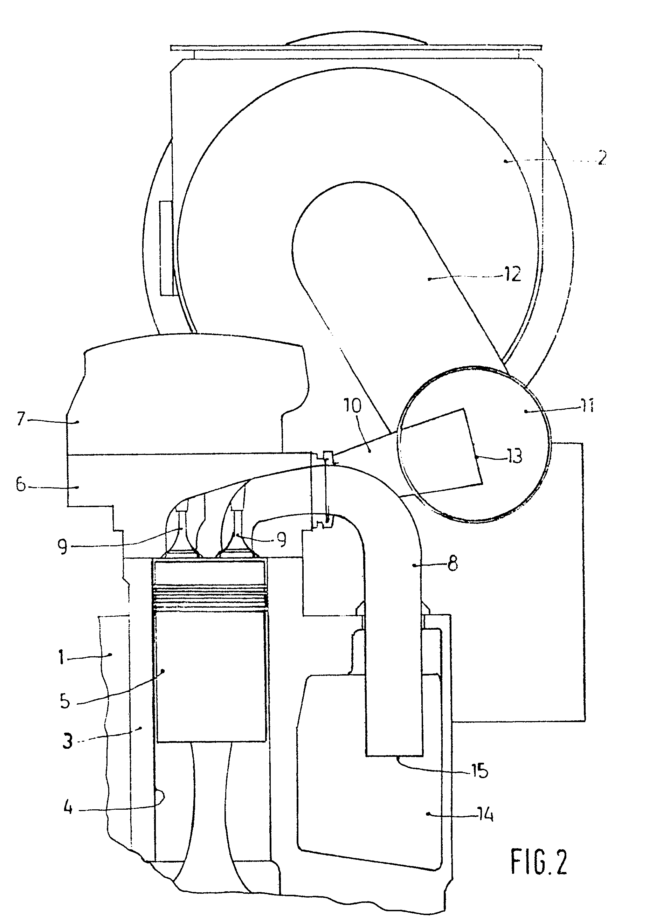

Nachstehend ist die erfindungsgemässe Lösung anhand zweier in der Zeichnung in Fig. 1 und 2 dargestellter Ausführungsbeispiele näher beschrieben. In den Figuren sind gleiche oder einander entsprechende Bauteile mit gleichem Bezugszeichen angezogen.

In den Figuren ist jeweils stark schematisiert und in einem nur für das Verständnis der Erfindung notwendigen Teil eine mittels eines Abgasturboladers aufgeladene 4-Takt-Brennkraftmaschine dargestellt.

Die 4-Takt-Brennkraftmaschine ist in der Zeichnung insgesamt mit 1, deren Abgasturbolader insgesamt mit 2 bezeichnet. Mit 3 ist ein Zylinder der Maschine, mit 4 dessen Zylinderbohrung und mit 5 ein in letzterer hin- und hergehender Hubkolben bezeichnet. Mit 6 ist ein den Zylinder 3 oben abschliessender Zylinderkopf und mit 7 ein auf letzterem sitzender Zylinderdeckel angezogen. Jeder Zylinderkopf 6 umfasst einen Einlasskanal 8, der hier durch zwei Einlassventile 9 beherrscht wird, sowie einen Auslasskanal 10, der hier durch zwei Auslassventile beherrscht wird. Letztere sind in der Zeichnung nicht dargestellt. Der in der Zeichnung teilweise sichtbare Auslasskanal 10 gehört dabei zu jenem, dem dargestellten nachfolgenden Zylinder. Der Auslasskanal 10 jedes Zylinders 3 mündet hier in eine Abgassammelleitung 11, die sich längs und parallel der Zylinderreihe erstreckt, sowie über einen Anschlusskanal 12 der mit dem Turbineneinlass des Abgasturboladers 2 verbunden ist. Dabei ist zumindest der sich aussen am Zylinderkopf 6 anschliessende Teil jedes Auslasskanales 10 nach Art eines Diffusors sich querschnittsmässig erweiternd ausgebildet; ausserdem ragt jeder Auslasskanal 10 so weit in die Abgassammelleitung 11 hinein, dass Abgas energieverlustarm in letztere eintreten kann. Eine solch vorteilhafte Lage ist dann gegeben, wenn jeder Auslasskanal 10 mit seiner Mündungsebene 13 bis etwa zur Mitte der Abgassammelleitung 11 reicht. Ferner ist jeder Auslasskanal 10 hinsichtlich der Grösse seiner an der abgassammelleitungsinternen Mündungsebene 13 gegebenen Austritts-Querschnittsfläche und damit auch seines gesamten Abgasaufnahmevolumens durch folgende Formel bestimmt:

$$A_{AK2} = c_m \cdot \frac{A_K}{22{,}5 \div 30}$$

In dieser Formel bedeuten:

$A_{AK2}$ = an der abgassammelleitungsinternen Mündungsebene 13 des Auslasskanales 10 gegebene Austritts-Querschnittsfläche,

$c_m$ = mittlere Kolbengeschwindigkeit bei Auslegungs-Drehzahl,

$A_K$ = Kolbenfläche, entsprechend der Querschnittsfläche einer Zylinderbohrung 4.

Anstelle einer Abgassammelleitung 11 für eine Aufladung der 4-Takt-Brennkraftmaschine nach dem Stauprinzip ist auch eine andere Ausbildung der Auslasskanäle 10 und Anbindung derselben an mehrere Abgasleitungen, nämlich für eine Stossaufladung der 4-Takt-Brennkraftmaschine, möglich.

Jeder Einlasskanal 8 ist an einen vom Verdichter des Abgasturboladers 2 mit Ladeluft versorgten Luftsammelraum 14 angeschlossen. Letzterer ist hier längs der Zylinder 3 im Maschinengehäuse integriert. Dabei kann jeder Einlasskanal 8 entweder – wie in Fig. 1 gezeigt – aussen vom Luftsammelraum 14 abzweigen, oder – wie in Fig. 2 gezeigt – bis in den Luftsammelraum 14 hinein verlängert sein. Darüber hinaus kann jeder Einlasskanal 8 entweder – wie in Figur 1 gezeigt – sich vom Eintritts-Querschnitt 15 aus zum Einlassventil hin verengend, oder – wie in Fig. 2 gezeigt – mit weitgehend konstantem Querschnitt ausgebildet sein.

Erfindungsgemäss ist nun jeder der Einlasskanäle 8 derart ausgebildet, dass dessen Volumen ($V_{EK}$) dem 0,4- bis 0,5fachen des Hubvolumens ($V_H$) des mit Luft zu versorgenden Zylinders 3 entspricht. Darüber hinaus entspricht nach einem weiteren erfindungsgemässen Kriterium die Querschnittsfläche ($A_{EK}$) bei Einlasskanälen 8 mit konstantem Querschnitt bzw. die mittlere Querschnittsfläche $A_{EKm}$ bei sich zu den Einlassventilen 9 hin verengenden Einlasskanälen 8 gleich dem 1,8–2,2fachen der bei voll offenem Einlassventil gegebenen, effektiv wirksamen Einlassfläche ($A_{Eeff}$). Diese effektiv wirksame Einlassfläche ($A_{Eeff}$) ist von Fall zu Fall unterschiedlich und muss an einer gegebenen Maschine durch Versuche ermittelt werden. Diese effektiv wirksame Einlassfläche ist, bedingt durch Dralleinflüsse, Druckunterschiede, besondere geometrische Gegebenheiten im Raum unmittelbar vor den Einlassventilsitzen und dergleichen kleiner als die tatsächlich bei voll offenem Einlassventil zwischen dessen Schliessfläche und der Sitzfläche am Zylinderkopf freigegebenen ringförmigen Einlassfläche. Nach Ermittlung der Grösse der effektiv wirksamen Einlassfläche ($A_{Eeff}$) sind bei gegebenem Hubvolumen der Zylinder die Grösse der Einlasskanäle 8 berechenbar und letztere dann auf der Basis dieser sich ergebenden Werte herstellbar.

Bezugszeichenliste
1 4-Takt-Brennkraftmaschine
2 Abgasturbolader
3 Zylinder
4 Zylinderbohrung
5 Hubkolben
6 Zylinderkopf
7 Zylinderdeckel
8 Einlasskanal
9 Einlassventil
10 Auslasskanal
11 Abgassammelleitung
12 Anschlusskanal
13 Mündungsebene v. 10
14 Luftsammelraum
15 Eintrittsquerschnitt

## Patentansprüche

1. Mittels Abgasturbolader aufgeladene 4-Takt-Brennkraftmaschine, deren durch Auslassventile beherrschte Auslasskanäle an eine oder mehrere mit der Abgasturbine verbundene Abgasleitungen, und deren von Einlassventilen beherrschte Einlasskanäle an einen vom Verdichter mit Ladeluft versorgten Luftsammelraum angeschlossen sind, dadurch gekennzeichnet, dass das Volumen ($V_{EK}$) jedes Einlasskanales (8) dem 0,4- bis 0,5 fachen des Hubvolumens ($V_H$) des mit Luft zu versorgenden Zylinders (3) entspricht, und dass die Querschnittsfläche $A_{EK}$ bei Einlasskanälen mit konstantem Querschnitt bzw. die mittlere Querschnittsfläche $A_{EKm}$ bei sich zu den Einlassventilen (9) hin verengenden Einlasskanälen (8) gleich dem 1,8- bis 2,2fachen der bei voll offenem Einlassventil (9) gegebenen, effektiv wirksamen Einlassfläche ($A_{Eeff}$) ist.

2. Aufgeladene 4-Takt-Brennkraftmaschine nach Anspruch 1, dadurch gekennzeichnet, dass jeder Einlasskanal (8) aussen vom Luftsammelraum (14) abzweigt.

3. Aufgeladene 4-Takt-Brennkraftmaschine nach Anspruch 1, dadurch gekennzeichnet, dass jeder Einlasskanal (8) bis in den Luftsammelraum (14) hinein verlängert ist.

## Revendications

1. Moteur à combustion interne à quatre temps suralimenté par un turbocompresseur sur échappement, dont les conduits d'échappement commandés par des soupapes d'échappement sont raccordés à une ou plusieurs conduite(s) d'échappement reliée(s) à la turbine sur échappement et dont les conduits d'admission commandés par des soupapes d'admission sont raccordés à une capacité collectrice d'air qui est alimentée en air de suralimentation par le compresseur, caractérisé en ce que le volume ($V_{EK}$) de chaque conduit d'admission (8) correspond à une valeur de 0,4 à 0,5 fois la cylindrée ($V_H$) du cylindre (3) qu'il s'agit d'alimenter en air et en ce que la surface de section ($A_{EK}$), dans le cas de conduits d'admission à section constante, ou la surface de section moyenne ($A_{EKm}$), dans le cas de conduits d'admission (8) qui se rétrécissent vers les soupapes d'admission (9), est égale à une valeur de 1,8 à 2,2 fois la surface d'admission effectivement efficace ($A_{Eeff}$) existant lorsque la soupape d'admission (9) est entièrement ouverte.

2. Moteur à combustion interne à quatre temps suralimenté selon la revendication 1, caractérisé en ce que chaque conduit d'admission (8) est branché extérieurement sur la capacité collectrice d'air (14).

3. Moteur à combustion interne à quatre temps suralimenté selon la revendication 1, caractérisé en ce que chaque conduit d'admission (8) se prolonge à l'intérieur de la capacité collectrice d'air (14).

## Claims

1. Four stroke internal combustion engine supercharged by an exhaust gas turbocharger, the outlet passages of which, controlled by outlet valves, are connected to one or several exhaust gas lines connected to the exhaust gas turbine, and the inlet passages of which, controlled by inlet valves, are connected to an air collecting chamber supplied with air charge from the compressor, characterised in that the volume ($V_{EK}$) of each inlet passage (8) corresponds to 0.4 to 0.5 times the stroke volume ($V_H$) of the cylinder (3) to be supplied with air, and in that the cross sectional surface $A_{EK}$ in the case of inlet passages with a constant cross section, or the mean cross sectional surface $A_{EKm}$ in the case of inlet passages (8) narrowing towards the inlet valves (9), is equal to 1.8 to 2.2 times the actual effective inlet surface ($A_{Eeff}$) presented in the case of a completely open inlet valve (9).

2. Supercharged four stroke internal combustion engine according to claim 1, characterised in that each inlet passage (8) branches outwardly from the air collecting chamber (14).

3. Supercharged four stroke internal combustion engine according to claim 1, characterised in that each inlet passage (8) is extended into the air collecting chamber (14).

FIG. 1

FIG.2